# EUROPEAN PATENT APPLICATION

(11) **EP 3 960 438 A1**
(43) Date of publication of application: **02.03.2022**
(21) Application number: 21181279.7
(22) Date of filing: 23.06.2021
(51) Int. Cl.: B32B 1/08, B32B 27/08, B32B 27/20, B32B 27/30, B32B 27/32, B32B 7/023, B32B 7/12, F16L 11/12, F16L 57/02, F16L 57/06, F16L 9/12, F24D 3/14

(54) **UNDERFLOOR HEATING SYSTEMS WITH MULTIPLE LAYER UNDERFLOOR HEATING PIPE**

(30) Priority: 26.08.2020 GB 202013375
(71) Applicant: WMS Underfloor Heating Ltd, Brookmans Park, Hertfordshire AL9 6DE (GB)
(72) Inventor: Cooper, Gregory, Brookmans Park, AL9 6DE (GB)
(74) Representative: Doherty, William

(57) **Abstract**

A multiple layer underfloor heating pipe (10) for underfloor heating systems is provided comprising: a tubular pipe inner layer (12); an oxygen-barrier layer (16) surrounding the tubular pipe inner layer (12) and which comprises an oxygen impermeable material, wherein the oxygen-barrier layer (16) has an identifiable characteristic associated therewith. There is also at least one outer layer (20) comprising a treated material, wherein the identifiable characteristic of the at least one outer layer (20) is different to that associated with the oxygen-barrier layer (16). A degree of damage to the multiple layer underfloor heating pipe (10) is determinable by interrogation of the identifiable characteristics at a damaged site thereof.

## Description

The present invention relates to a multiple layer underfloor heating pipe for underfloor heating systems which is suited to the rapid identification of damage thereto by an installer. The invention further relates to an underfloor heating system comprising one or more said pipes, a method of determining damage to an underfloor heating pipe, a method of forming a damage-identifiable multiple layer underfloor heating pipe, and to a pipe formed in accordance with said method.

Underfloor heating systems can be installed under a floor covering within a building as either an electrically heated system, or as a system which couples into an existing central heating system. In the latter case, a significant amount of pipework must be installed underneath the floor covering.

One of the most critical aspects of the underfloor heating pipes is that the pipe must remain in good shape and not become damaged during site construction installation, as this will result in a leak on the central heating network underneath a floor covering. Construction sites are typically dirty and rough, and clean, undamaged pipes can quickly become deformed or damaged as they are removed from a pipe reel.

The underfloor heating pipes are typically formed from a flexible plastics material which can be reeled for easy transport and storage. However, such pipes are typically more gas-permeable than traditional copper piping used in central heating systems. As such, underfloor heating pipes typically include an oxygen-barrier layer to reduce the effect of gas permeation into or out of the pipe network.

If the oxygen-barrier layer becomes damaged, the pipe itself begins to oxidise, and sludge can accumulate inside the core of the pipe, leading to blockages, particularly in the moving components of the central heating network, such as valves and similar working parts.

A small amount of damage to a pipe may be acceptable, if the oxygen-barrier layer is undamaged. However, this is not distinguishable by a user, and therefore at present, damage to a pipe must be treated as having damage to the oxygen-barrier layer to be certain. This results in material wastage as otherwise acceptable pipes must be disposed of. This is particularly problematic if the pipework has already been installed under the floor and, for example, a pipe is clipped by a drill or screw. This would likely necessitate the entire floor being dismantled.

The present invention seeks to obviate these issues by providing a multiple layer underfloor heating pipe which is constructed to assist identification of damage.

According to a first aspect of the invention, there is provided an underfloor heating system comprising a multiple layer underfloor heating pipe including: a tubular pipe inner layer formed from polyethylene of a raised temperature (PE-RT) having a first colour; an oxygen-barrier layer surrounding the tubular pipe inner layer and which is formed from ethylene-vinyl alcohol copolymer (EVOH), wherein the oxygen-barrier layer has a second colour which is different to the first colour; and at least one outer layer formed from polyethylene of a raised temperature (PE-RT), wherein the at least one outer layer has a third colour which is different to the first and second colours; and a pipe mounting means for mounting the multiple layer underfloor heating pipe in a serpentine or undulating configuration wherein a degree of damage to the multiple layer underfloor heating pipe is determinable by interrogation of the visible colour at a damaged site thereof.

An underfloor pipe system for coupling to an underfloor heating system which can allow for the quick and accurate determination of a degree of damage to the pipe, particularly in a radial direction, without needing to completely extract installed pipework. This vastly reduces the inconvenience and cost involved when damage occurs to already-installed pipe systems. The use of an identifiable characteristic for the different layers helps with identification of when an underlying layer is exposed by the damage, simplifying the evaluation of the need to replace or otherwise.

Preferably, the ethylene-vinyl alcohol copolymer (EVOH)may be a pigmented material having the said second colour.

Making the oxygen impermeable material of the oxygen-barrier layer so as to be identifiable, for example, by pigmentation, allows for the ready identification of the layer.

Alternatively, the oxygen-barrier layer may further comprise an inner layer between the ethylene-vinyl alcohol copolymer (EVOH)and the tubular pipe inner layer, the second colour being associated with the inner layer. The oxygen impermeable material may be light-transmissible, and furthermore, the inner layer may be a pigmented adhesive layer. Instead of pigmenting the oxygen-barrier layer as a whole, it could be made to be light-transmissible so that the identifiable characteristic of the layer or material below is visible. This would also achieve the same end result.

Ensuring that the tubular pipe inner layer is also easily identifiable allows for every individual layer of the multiple layer underfloor heating pipe to be quickly identified, and thus the depth of any damage thereto assessed.

Preferably, each treated material may be a pigmented or dyed material.

Pigmentation or dyeing, as opposed to coating or painting, ensures that the colour permeates through the treated material. This means that the identifiable characteristic remains identifiable even if the outer surface of a given layer is damaged. This maintains the user's capabilities to readily identify damage.

Optionally, the oxygen-barrier layer may be connected to the tubular pipe inner layer via an adhesive polymer, the identifiable characteristic of the adhesive polymer being different to at least that of the oxygen-barrier layer.

The at least one outer layer may be connected to the oxygen-barrier layer via an adhesive polymer, the identifiable characteristic of the adhesive polymer being different to at least that of the oxygen-barrier layer and the at least one outer layer.

Making the adhesive connecting the various layers so as to have an identifiable characteristic different to that of their respective associated layers further improves the identifiability of the layered structure, thereby allowing for rapid detection of damage to the pipes.

Preferably, the tubular pipe inner layer may be at least in part oxygen-permeable.

The material used for the tubular pipe inner layer may only have sufficient flexibility for use in a serpentine configuration if it is at least in part oxygen-permeable, which is clearly undesirable for

The identifiable characteristic of the oxygen-barrier layer may be identical and/or uniform through the entire radius and length of the oxygen-barrier layer.

Preferably, the identifiable characteristic of the at least one outer layer may be identical and/or uniform through the entire radius and length of the at least one outer layer.

Uniformity of the identifiable characteristic not only along the length of the layers, but also through the layer structure itself, ensures that damage to the outer portions of the layers does not result in negation of the identifiable characteristic as well, which might be the case for, for example, a painted coating.

The present invention allows for an entire underfloor heating system to be inspected for damage in advance of the laying of the floor covering, such as carpet, laminate, wood, or vinyl, without the risk of later needing to take up the floor covering once damage was found at a later date. This significantly reduces risk for the operator, yielding an enhanced underfloor heating system from the installer's perspective.

According to a second aspect of the invention, there is provided a method of determining damage to an underfloor heating pipe, the method comprising the steps of: a] installing a multiple layer underfloor heating pipe in accordance with the first aspect of the invention; b] in the event of damage to the multiple layer underfloor heating pipe of the underfloor heating system, interrogating the multiple layer underfloor heating pipe to determine an exposed colour of the multiple layer underfloor heating pipe; and c] determining, based on the exposed colour, whether the multiple layer underfloor heating pipe is in need of replacement.

Optionally, during step c], the determining may be performed based on a visual interrogation of exposed colours of the layers of the multiple layer underfloor heating pipe.

The installation process ensures that continuous inspection yields important data regarding damage sites, allowing floor coverings to be overlaid with confidence.

According to the invention, there is provided a method of forming a damage-identifiable multiple layer underfloor heating pipe, the method comprising the steps of: a] providing a tubular pipe inner layer; b] applying an oxygen-barrier layer around the tubular pipe inner layer, wherein the oxygen-barrier layer comprises an oxygen impermeable material, wherein the oxygen impermeable material has an identifiable characteristic associated therewith; and c] applying at least one outer layer to the oxygen-barrier layer, wherein the at least one outer layer comprises a treated material, wherein the identifiable characteristic of the at least one outer layer is different to that associated with the oxygen-barrier layer, such that a degree of damage to the multiple layer underfloor heating pipe is determinable by interrogation of the identifiable characteristics at a damaged site thereof.

Preferably, the identifiable characteristic may be a colour of the material with which it is associated.

In order to form the multiple layer underfloor heating pipe, a specific sequence of layering must be considered in order to build up the various different identifiable characteristics. This provides the necessary damage-identification enhancements defined by the present invention, which may or may not include colour or colour contrast as the means of damage identification.

According to the invention, there is provided a damage-identifiable multiple layer underfloor heating pipe formed according to the method described above.

According to the invention, there is provided a multiple layer underfloor heating pipe comprising: a plurality of radial layers, at least one of the layers being a gas-impermeable layer; each of the plurality of radial layers having a different colour or light-transmissibility property; wherein a degree of damage to the multiple layer underfloor heating pipe is determinable by interrogation of the colour of the radially-innermost visible layer exposed at a damaged site thereof.

Colour coding of the layers of a pipe allows for simple visual inspection of a damaged area of the pipe body to determine whether the oxygen-barrier layer thereof has been breached, and therefore whether the pipe must be replaced.

According to a further aspect of the invention, there is provided a multiple layer underfloor heating pipe for underfloor heating systems, the multiple layer underfloor heating pipe comprising: a tubular pipe inner layer; an oxygen-barrier layer surrounding the tubular pipe inner layer and which comprises an oxygen impermeable material, wherein the oxygen-barrier layer has an identifiable characteristic associated therewith; and at least one outer layer comprising a treated material, wherein the identifiable characteristic of the at least one outer layer is different to that associated with the oxygen-barrier layer; wherein a degree of damage to the multiple layer underfloor heating pipe is determinable by interrogation of the identifiable characteristics at a damaged site thereof.

The invention will now be more particularly described, by way of example only, with reference to the accompanying drawings, in which:
Figure 1 shows a cross-sectional representation of a first embodiment of a multiple layer underfloor heating pipe of an underfloor heating system in accordance with the first aspect of the invention;
Figure 2 shows the multiple layer underfloor heating pipe of Figure 1, following damage thereto; and
Figure 3 shows a cross-sectional representation of a second embodiment of a multiple layer underfloor heating pipe of an underfloor heating system in accordance with the first aspect of the invention.

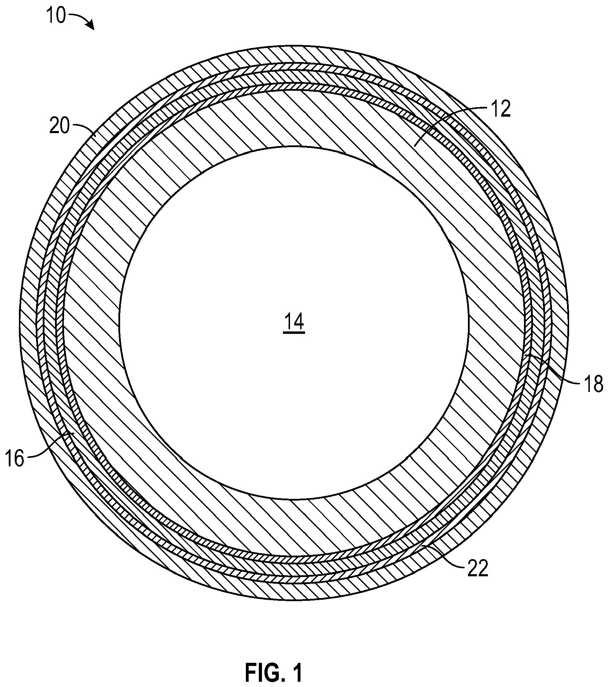

Referring to Figure 1, there is shown a multiple layer underfloor heating pipe, referenced globally at 10, and which is shown in cross-section so that the multiple layers of the pipe 10 can be seen.

The multiple layer underfloor heating pipe 10 comprises a tubular pipe inner layer 12, which forms the internal channel 14 or conduit of the multiple layer underfloor heating pipe 10, through which heated water can pass. Typically, the tubular pipe inner layer 12 may be formed from a resin material, such as polyethylene of a raised temperature (PE-RT).

Around the tubular pipe inner layer 12 is provided an oxygen-barrier layer 16 or similarly gas-impermeable membrane, which preferably completely covers the entire circumference and length of an outer surface of the tubular pipe inner layer 12, thereby forming a total gas barrier. The oxygen-barrier layer 16 may preferably be formed from a thermoplastic material, such as ethylene-vinyl alcohol copolymer (EVOH).

In order to prevent dislocation of the tubular pipe inner layer 12 and oxygen-barrier layer 16, it is preferred that there be an adhesive layer 18 which adhesively connects the tubular pipe inner layer 12 and oxygen-barrier layer 16 together.

To protect the oxygen-barrier layer 16, at least one outer layer 20 is provided. Only a single outer layer 20 is shown in Figure 1, for simplicity, but it will be apparent that additional outer layers could be utilised as required. The outer layer 20 may be formed from a resin material, such as polyethylene of a raised temperature (PE-RT), which has a much greater resistance to damage than the oxygen-barrier layer 20.

In order to prevent dislocation of the oxygen-barrier layer 16 and the outer layer 20, it is preferred that there be an adhesive layer 22 which adhesively connects the oxygen-barrier layer 16 and the outer layer 20 together.

Additional outer layers may be concentrically added in the same way as the said outer layer 20.

The oxygen-barrier layer 16 of Figure 1 has an identifiable characteristic which arises due to a specific treatment of the material from which it is formed. In this case, the material is dyed or pigmented so as to be coloured. The oxygen-barrier layer 16 is shown as orange in Figure 1.

The identifiable characteristic here is colour, and is a property of the treated material. It is unlikely that, for example, a coloured coating of the oxygen-barrier layer 16 would be sufficient, since damage to the coloured coating would remove the identifiable nature thereof.

Other identifiable characteristics could be considered, however. For example, a material texture, or reflective properties of the material, could be utilised, which may be interrogable by the human eye to produce similar results to that of a coloured material. These would be characteristics conferred by treatment of the material, thus resulting in a detectable change to the material itself.

The outer layer 20 also has the identifiable characteristic, which arises due to a specific treatment of the material from which it is formed. Again, it is dyed or pigmented so as to be coloured. The identifiable characteristic of the outer layer 20 is selected so as to be different from that selected for the oxygen-barrier layer 16. The outer layer 16 is shown to be green in Figure 1.

The adhesive layers 18, 22 may also have the identifiable characteristic, which may be different to those of the oxygen-barrier layer 16 and the outer layer 20. The inner adhesive layer 18, that is, that connecting the tubular pipe inner layer 12 and oxygen-barrier layer 16, is shown as being red, whilst the outer adhesive layer 22, that is, that connecting the oxygen-barrier layer 16 and the outer layer 20, is shown as being yellow. This creates an effective 'traffic-light' warning system, in which the degree of damage to the pipe is demonstrably indicated via the composition of the multiple layer underfloor heating pipe 10 directly.

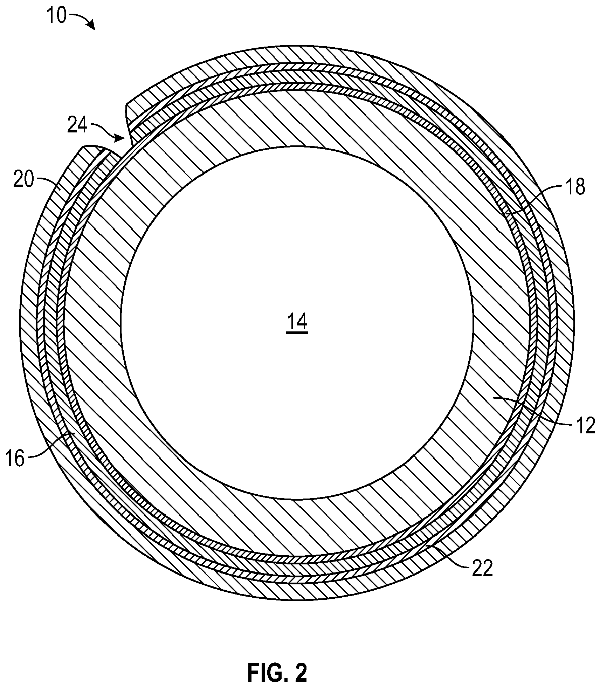

This effect is shown in Figure 2, in which a damaged area 24 of the multiple layer underfloor heating pipe 10 can be seen. The outer layer 20, outer adhesive layer 22, and oxygen-barrier layer 16 have all been damaged, which exposes not only the red warning layer of the inner adhesive layer 18, but also the layer structure leading up to the innermost layer which has been damaged, that is the oxygen-barrier layer 16.

As such, it is not just the presence of the colour exposed, in this case red, which identifies the risk associated with the damage, but also the contrast between the preceding layers which allows the user to readily identify whether there is a need for replacement of the multiple layer underfloor heating pipe 10. It would not ordinarily be possible to count the different layers present, whereas the structure of the present multiple layer underfloor heating pipe 10 allows for this possibility.

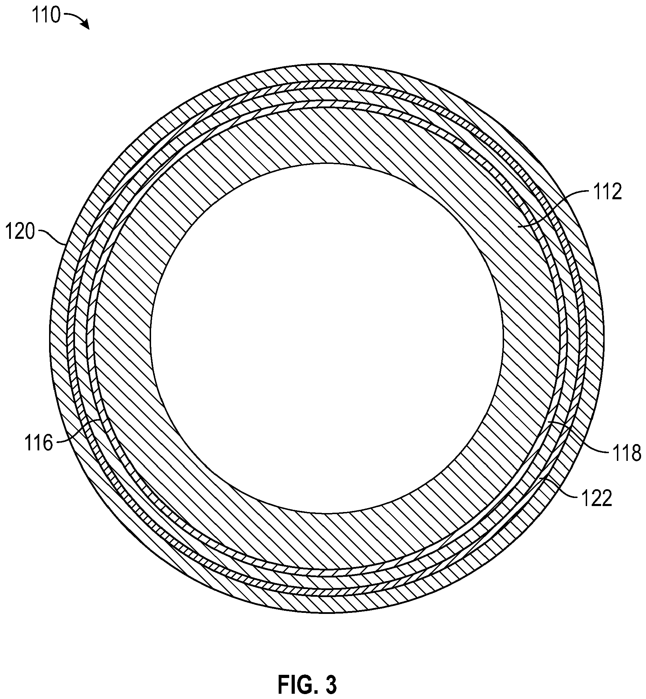

An alternative embodiment of multiple layer underfloor heating pipe is indicated globally in Figure 3 at 110.

In this arrangement, the outer layer 120 is green, whilst the outer adhesive layer 122 is yellow. However, the oxygen-barrier layer 116 would be transparent, so that the inner adhesive layer 118 is visible, which is red. The tubular pipe inner layer 112 would then not require pigmentation. Fewer coloured layers are therefore required when compared with the first embodiment. In this scenario, the user can see through the oxygen impermeable material of the oxygen-barrier layer 116, and the inner adhesive layer 118 can be considered to form part of the oxygen-barrier layer 116, in that it confers the identifiable characteristic thereto, via identification of the colour through the oxygen impermeable material. In this scenario, any exposure of the red colour of the inner adhesive layer 118 would be indicative of a need for replacement even if the oxygen impermeable material were not damaged, since no protective layer would remain.

Indeed, the adhesive could also be made to be light-transmissible, in which case, the colour of the tubular pipe inner layer would be visible through the oxygen-barrier layer to identify the damage.

An underfloor heating system will typically include a plurality of underfloor heating pipes installed in a serpentine or undulating configuration underneath a floor covering, being mounted onto a pipe mounting plate or connector. Typical pipe mounting plates comprise a plate which is receivable under the floor covering and which has a plurality of upstanding nubs or castellations arranged in an alternating pattern to allow for the underfloor heating pipes to be wound therearound. Other pipe mounting means are available, however, for instance clips which are positioned in the flooring below the top layer into which the underfloor heating pipe is insertable into, or a tacking system in which the pipes are tacked to the floor.

Floating supports, in which the pipes are mounted into foam or similar materials, can also be used as a pipe support, or indeed the pipes can be suspended from the chipboard or similar material which forms the overlayer of the floor.

A multiple layer underfloor heating pipe 10; 110 must have specific properties which excludes other hose pipe types from being used. An underfloor heating pipe requires an oxygen barrier layer to prevent corrosion, since it is mounted under floor or in concrete. It must be kink-resistant, so that an undulating pathway can be formed, and the underfloor heating pipe must be capable of withstanding the pressure of a central heating system. The kink-resistance is important. Garden hoses, for example, are very prone to kinking, which might result in catastrophic damage to the central heating system.

The multiple layer underfloor heating pipes 10; 110 of the present invention can therefore be installed in much the same manner as known in the art, whilst having the aforementioned advantages associated with the identifiable characteristics which are not available in the art.

Damage to the underfloor heating pipe 10; 110 can therefore be determined by installing the multiple layer underfloor heating pipe 10; 110 into or so as to form an underfloor heating system. In the event of damage to the multiple layer underfloor heating pipe 10; 110, the multiple layer underfloor heating pipe 10; 110 is interrogated to determine exposed identifiable characteristics of the multiple layer underfloor heating pipe 10; 110. Based on the exposed identifiable characteristics, a determination can be made as to whether the multiple layer underfloor heating pipe 10; 110 is in need of replacement.

It will be appreciated that the multiple layer underfloor heating pipes 10; 110 are not available on the market at present, and therefore must be manufactured as required. This can be done as follows.

A method of forming a damage-identifiable multiple layer underfloor heating pipe 10; 110 is available, which comprises the steps of: a] providing a tubular pipe inner layer 12; 112; b] applying an oxygen-barrier layer 16; 116 around the tubular pipe inner layer 12; 112, wherein the oxygen-barrier layer 16; 116 is formed from an oxygen impermeable material, wherein the oxygen impermeable material is a treated material having an identifiable characteristic associated therewith; and c] applying at least one outer layer 20; 120 to the oxygen-barrier layer 16; 116, wherein the at least one outer layer 20; 120 is formed from a treated material, wherein the identifiable characteristic of the at least one outer layer is different to that of the oxygen-barrier layer 16; 116, such that a degree of damage to the multiple layer underfloor heating pipe 10; 110 is determinable by interrogation of the identifiable characteristics at a damaged site thereof.

It is therefore possible to provide a multiple layer underfloor heating pipe comprising a plurality of radial layers, at least one of the layers being a gas-impermeable layer; each of the plurality of radial layers having a different colour; wherein a degree of damage to the multiple layer underfloor heating pipe is determinable by interrogation of the colour of the radially-innermost layer exposed at a damaged site thereof. This, or indeed the use of any appropriate identifiable characteristics of the various layers of the pipe, allow for an installer to quickly identify damage to the underfloor heating system, prior to installation of any overlying floor covering. There is also the subsidiary benefit of ready identification of which pipe has been selected; for instance, pipes of different dimensions could have different colours or colour contrasts thereon.

It will be appreciated that, although the present arrangement has been specifically designed for underfloor heating pipes, due to the need for them to be covered by a floor covering, that the pipe construction technique could readily be applied to other pipe technologies. This is of particular relevance in fields which utilise flexible pipes, such as those made from plastics materials, and for pipes which would otherwise be obscured behind other constructional materials. For example, the pipes could be used in other plumbing contexts.

However, underfloor heating pipes are different to many other pipe types. In particular, standard hose pipes are designed to be used in an exposed environment, and therefore are designed to be abrasion resistant. Underfloor heating pipes are more likely to experience blunt or cutting trauma, which would cut through in a perpendicular direction.

The words 'comprises/comprising' and the words 'having/including' when used herein with reference to the present invention are used to specify the presence of stated features, integers, steps or components, but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

The embodiments described above are provided by way of examples only, and various other modifications will be apparent to persons skilled in the field without departing from the scope of the invention as defined herein.

## Claims

1. An underfloor heating system comprising:
a multiple layer underfloor heating pipe (10; 110) including:
a tubular pipe inner layer (12; 112) formed from polyethylene of a raised temperature (PE-RT) having a first colour;
an oxygen-barrier layer (16; 116) surrounding the tubular pipe inner layer and which is formed from ethylene-vinyl alcohol copolymer (EVOH), wherein the oxygen-barrier layer has a second colour which is different to the first colour; and
at least one outer layer (20; 120) formed from polyethylene of a raised temperature (PE-RT), wherein the at least one outer layer (20; 120) has a third colour which is different to the first and second colours; and
a pipe mounting means for mounting the multiple layer underfloor heating pipe (10; 110) in a serpentine or undulating configuration; wherein a degree of damage to the multiple layer underfloor heating pipe (10; 110) is determinable by interrogation of the visible colour at a damaged site thereof.

2. An underfloor heating system as claimed in claim 1, wherein the ethylene-vinyl alcohol copolymer (EVOH) is a pigmented material having the second colour.

3. An underfloor heating system as claimed in claim 1, wherein the oxygen-barrier layer (16) further comprises an inner layer between the ethylene-vinyl alcohol copolymer (EVOH) and the tubular pipe inner layer (12; 112), the second colour being associated with the inner layer.

4. An underfloor heating system as claimed in claim 3, wherein the inner layer is a pigmented adhesive layer.

5. An underfloor heating system as claimed in any one of the preceding claims, wherein the oxygen impermeable material is light-transmissible.

6. An underfloor heating system as claimed in any one of the preceding claims, wherein the oxygen-barrier layer (16; 116) is connected to the tubular pipe inner layer (12; 112) via an adhesive polymer, the identifiable characteristic of the adhesive polymer being different to at least that of the oxygen-barrier layer (16; 116).

7. An underfloor heating system as claimed in any one of the preceding claims, wherein the at least one outer layer (20; 120) is connected to the oxygen-barrier layer (16; 116) via an adhesive polymer, the identifiable characteristic of the adhesive polymer being different to at least that of the oxygen-barrier layer (16; 116) and the at least one outer layer (20; 120).

8. An underfloor heating system as claimed in any one of the preceding claims, wherein the tubular pipe inner layer (12; 112) is at least in part oxygen-permeable.

9. An underfloor heating system as claimed in any one of the preceding claims, wherein the second colour of the oxygen-barrier layer (16; 116) is identical and/or uniform through the entire radius and length of the oxygen-barrier layer (16; 116).

10. An underfloor heating system as claimed in any one of the preceding claims, wherein the third colour of the at least one outer layer (20; 120) is identical and/or uniform through the entire radius and length of the at least one outer layer (20; 120).

11. An underfloor heating system as claimed in any one of the preceding claims, wherein the pipe mounting means comprises a pipe mounting plate, support, or connector.

12. A method of determining damage to an underfloor heating pipe, the method comprising the steps of:
a] installing an underfloor heating system as claimed in any one of the preceding claims;
b] in the event of damage to the multiple layer underfloor heating pipe (10; 110) of the underfloor heating system, interrogating the multiple layer underfloor heating pipe (10; 110) to determine an exposed colour of the multiple layer underfloor heating pipe (10; 110); and
c] determining, based on the exposed colour, whether the multiple layer underfloor heating pipe (10; 110) is in need of replacement.
